# EUROPEAN PATENT APPLICATION

(11) **EP 2 147 734 A1**
(43) Date of publication of application: **27.01.2010**
(21) Application number: 08425511.6
(22) Date of filing: 25.07.2008
(51) Int. Cl.: B23B 31/19, B23B 33/00

(54) **Face driver for machine tools**

(71) Applicant: Tecnologie FRB SRL, 40037 Sasso Marconi Frazione Pontecchio, Bologna (IT)
(72) Inventor: Franceschelli, Marco, 40043 Marzabotto, Frazione Sirano (BO) (IT)
(74) Representative: Modiano, Micaela Nadia

(57) **Abstract**

A face driver (1) for machine tools, comprising a substantially tubular body (2) that has, along its longitudinal axis (A), a rear shank (3) for detachable rigid coupling to the machine tool and is frontally associated with a head (4) for fastening the workpiece (P). The head (4) accommodates, in a central seat (4a), a center (5) for the workpiece (P), which is substantially coaxial to the longitudinal axis (A) and forms at least one peripheral seat (5a) for at least one respective claw (6), which is arranged around the center (5). The face driver (1) comprises, externally with respect to the head (4), at least one ring (7) of external cavities (7a) for accommodating respective additional claws (8) that can slide along the axis (A), said additional claws (8) being selectively able to perform a translational motion toward the workpiece (P) by means of a respective pusher (9).

## Description

The present invention relates to a front transport device for machine tools, particularly for grinding machines, lathes and the like.

It is known that in machine tools such as lathes, grinding machines and the like, the workpiece is placed and secured between a transport device and a tailstock, which are mutually aligned.

Some of the known types of front transport device have a center and a plurality of claws distributed along the peripheral region of such center: during placement, the center enters a corresponding central opening of the workpiece, against the front surface of which the claws are fastened by pushing, so as to center and lock them and allow their rotation by means of the transmission of tangent forces.

The shafts, the bars and the components to be machined on the machine tool are referenced hereinafter generically as workpieces.

The center and the claws protrude from guiding seats of a front head, which is fixed by way of screw means on a hollow elongated body of the transport device; the fastening of the claws on the workpiece is determined by the advancement of a pusher stem, which is accommodated so that it can slide in a rear tubular shank of such elongated body.

If it is necessary to work on workpieces having a large diameter with respect to the grip diameter of the claws, a scarcely efficient locking occurs which, in some cases, does not ensure that the machine tool can work with the necessary safety.

Likewise, by adopting transport devices that are adapted to manage workpieces having a large diameter, it is not possible to proceed with machinings that reduce their diameter to values that are lower than the grip diameter of the corresponding claws.

It is therefore clear that known types of transport device are not versatile enough to be able to work on workpieces of any diameter.

Format changes of the workpieces must be accompanied by a replacement of the transport device that is provided on the machine tool, or by working on two different machine tools, each designed for a particular range of workpieces of uniform size.

The aim of the present invention is to provide a front transport device for machine tools that is adapted to manage workpieces having a variable diameter according to a broad size range.

Within this aim, an object of the present invention is to provide a front transport device for machine tools in which any workpiece is supported and transported with excellent balancing and stability.

Another object of the present invention is to provide a front transport device for machine tools that has a low cost, is relatively simple to provide in practice and is safe in application.

This aim and these and other objects, which will become better apparent hereinafter, are achieved by the present front transport device for machine tools, of the type that comprises a substantially tubular body that has, along its longitudinal axis, a rear shank for detachable rigid coupling to the machine tool and is frontally associated with a head for fastening the workpiece, said head accommodating, in a central seat, a center for the workpiece, which is substantially coaxial to said longitudinal axis, and forming at least one peripheral seat for at least one respective claw, which is arranged around said center, **characterized in that** it comprises, externally with respect to said head, at least one ring of external cavities for accommodating respective additional claws that can slide along the axis, said additional claws being selectively able to perform a translational motion toward the workpiece by means of a respective pusher.

Further characteristics and advantages of the invention will become better apparent and evident from the following detailed description of a preferred but not exclusive embodiment of a front transport device for machine tools, illustrated by way of non-limiting example in the accompanying drawings, wherein:

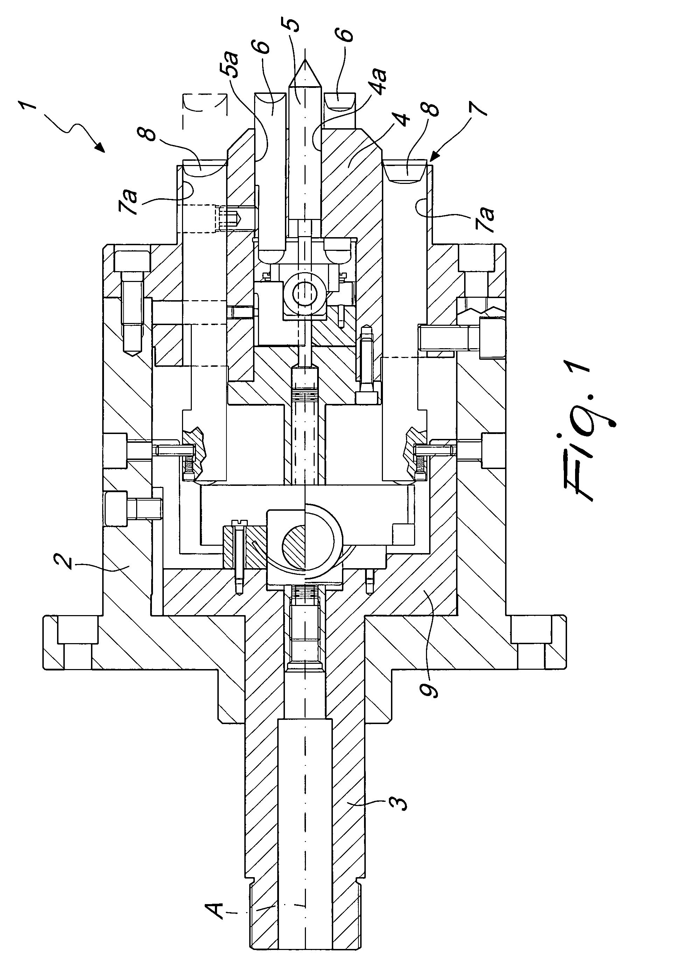

Figure 1 is a sectional side view, taken along a longitudinal plane, of a front transport device for machine tools according to the invention;

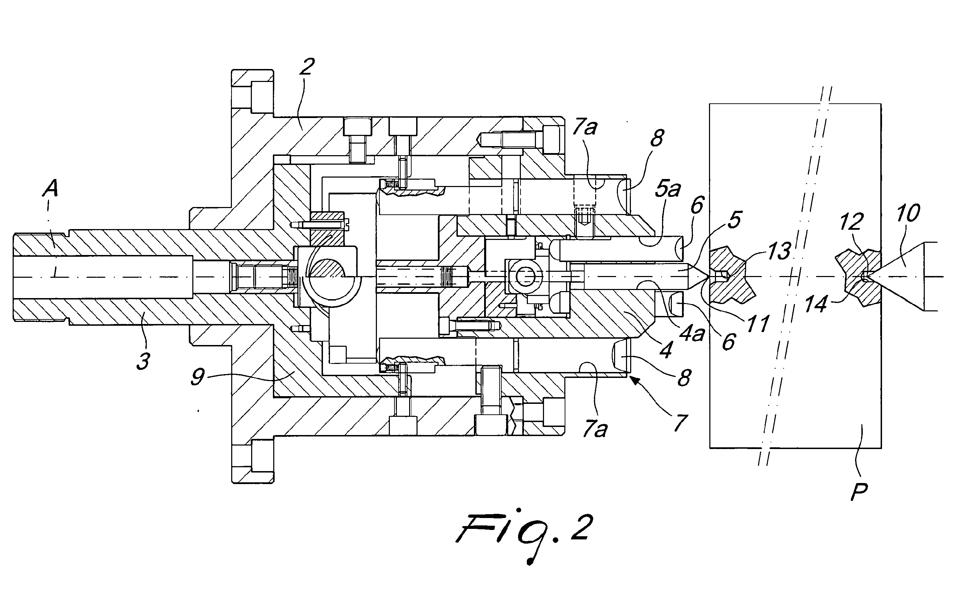

Figure 2 is a sectional side view, taken along a longitudinal plane, of step a) of the operating method of a front transport device for machine tools according to the invention;

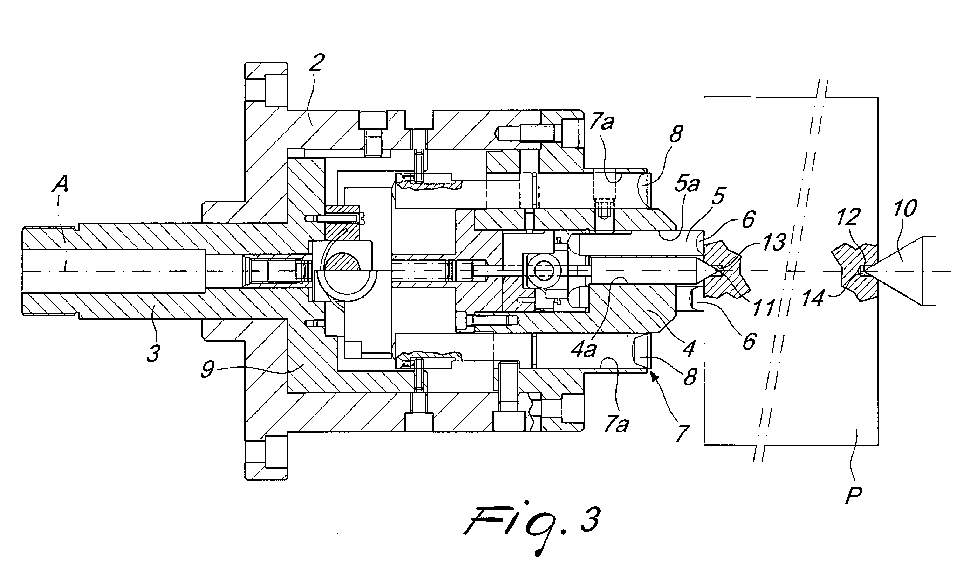

Figure 3 is a sectional side view, taken along a longitudinal plane, of step b) of the operating method of a front transport device for machine tools according to the invention;

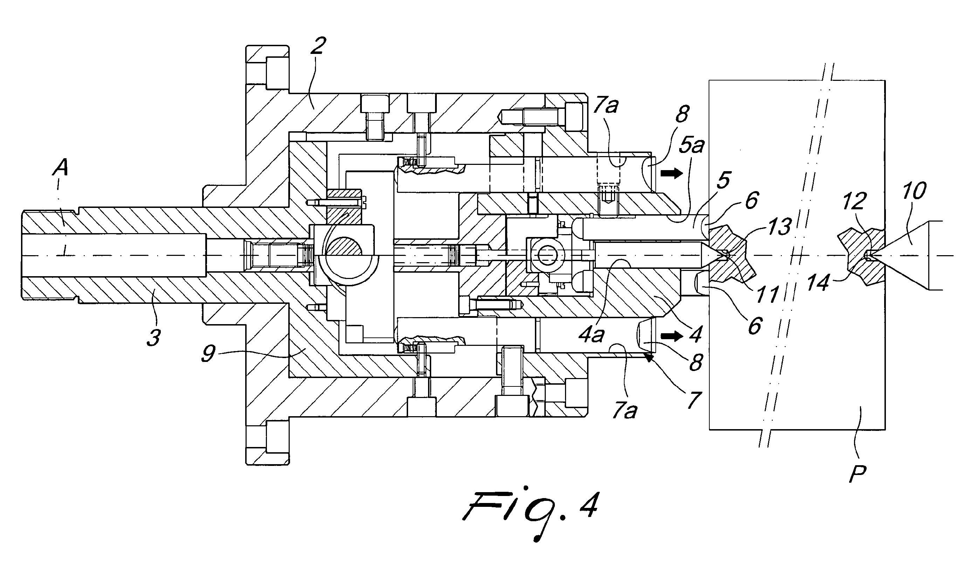

Figure 4 is a sectional side view, taken along a longitudinal plane, of step c) of the operating method of a front transport device for machine tools according to the invention;

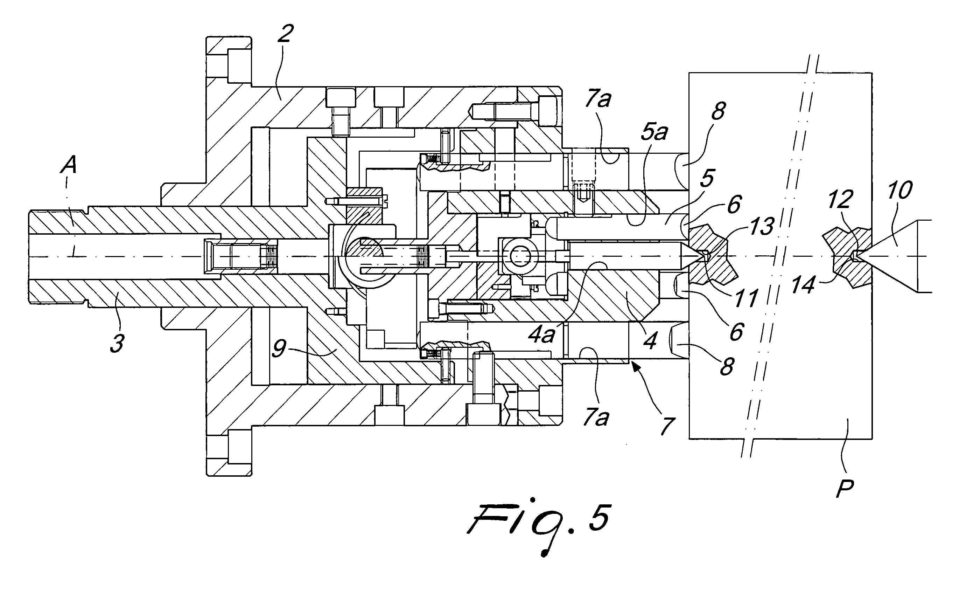

Figure 5 is a sectional side view, taken along a longitudinal plane, of step d) of the operating method of a front transport device for machine tools according to the invention;

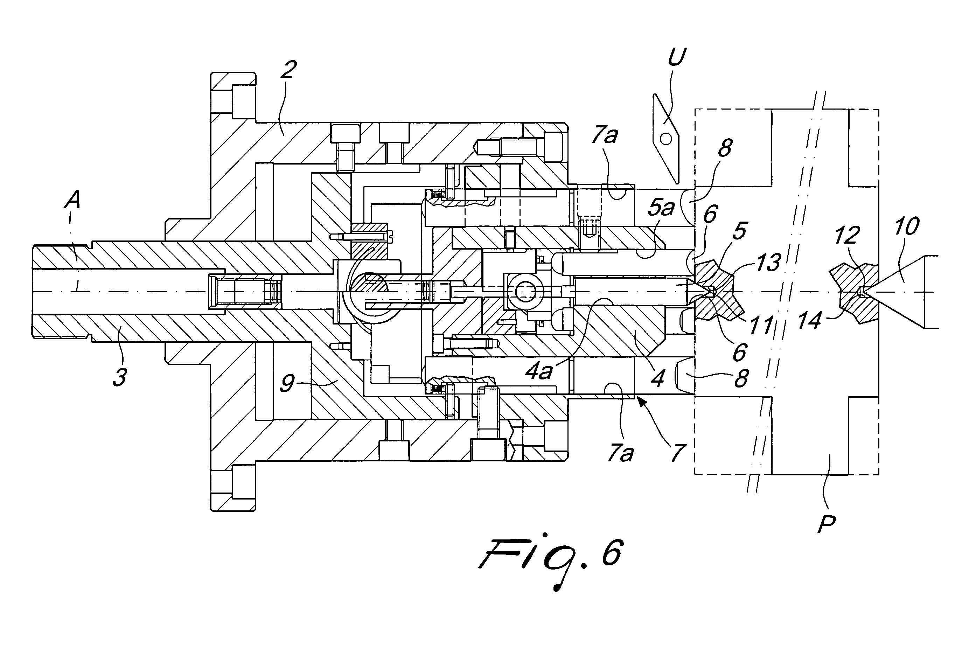

Figure 6 is a sectional side view, taken along a longitudinal plane, of an example of machining of the workpiece, in which the machining diameter is close to the diameter of the outer claws in a front transport device for machine tools according to the invention;

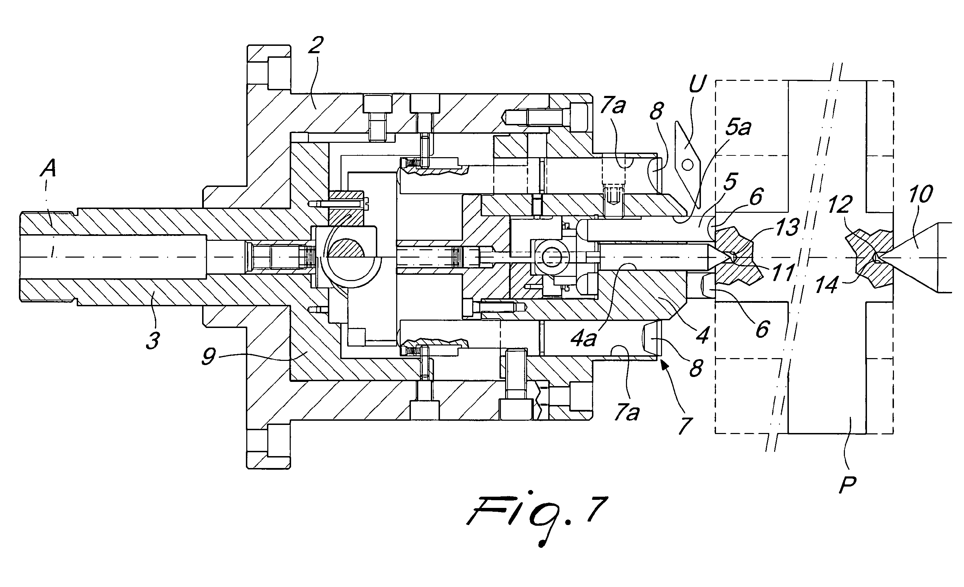

Figure 7 is a sectional side view, taken along a longitudinal plane, of step e) of the operating method of a front transport device for machine tools according to the invention.

With reference to the figures, the reference numeral 1 generally designates a front transport device for machine tools.

The transport device 1 comprises a substantially tubular body 2 which has, along its longitudinal axis A, a rear shank 3 for detachable rigid coupling to the machine tool.

The transport device 1 is associated frontally with a head 4 for securing a workpiece P.

The head 4 accommodates, in a central seat 4a, a center 5 for centering on the workpiece P: the center 5 is substantially coaxial to the longitudinal axis A.

At least one peripheral seat 5a for at least one respective claw 6 is formed on the head 4: the claw 6 is arranged along the boundary of the center 5, in particular, when there are several claws 6 they are arranged around the center 5 along a substantially circular arrangement.

Externally to the head 4 there is at least one ring 7 of external cavities 7a: the cavities 7a are designed to accommodate respective additional claws 8, which can slide along the axis A.

The additional claws 8 can undergo a selective translational motion toward the workpiece P by means of a respective pusher 9.

According to an embodiment of particular interest in practice and in application, at least one portion of the rear shank 3 can perform a translational motion by way of the action of suitable external pusher means.

The pusher 9 is associated with such translating portion of the rear shank 3 for the movement of the additional external claws 8: in the embodiment shown in the accompanying figures, the pusher 9 and the shank 3 are different regions of a same component; in the cases in which instead there are several rings 7 of different diameters, it is necessary to resort to independent sliding components, which are accommodated in the shank 3 (or otherwise associated with it), each of which is coupled to a respective pusher.

In particular, in order to obtain maximum promptness of the transport device 1, the suitable external pusher means comprise a respective hydraulic actuator: by means of the hydraulic piston it is possible to control very precisely the stroke of the pusher 9 and therefore of the external claws 8.

As already mentioned, in the accompanying figures the ring 7 is a single ring and comprises a plurality of cavities 7a that are distributed along a substantially circular arrangement, whose center coincides with the trace of the axis A: the cavities 7a have a shape and dimensions that are complementary to those of the respective claws 8; in this manner, the claws 8 can slide by being guided within the corresponding cavities 7a.

According to an embodiment that is alternative with respect to the one shown in the accompanying figures, the rings 7 can be at least two (substantially concentric and having different diameters). In this case also, each one comprises a respective plurality of distributed cavities 7a, whose shape and dimensions are complementary to those of the claws 8 that it will have to accommodate. With a transport device 1 of this type, provided with a plurality of concentric rings 7, it is possible to work on workpieces P of any diameter, since (particularly also on workpieces whose diameters are initially very large with respect to the final diameter after machining) even in the case of particular large diameters it is possible to rely on external claws 8 arranged quite externally with respect to the center 5 and ensure optimum stabilization of the workpiece P.

All the claws 8 related to a same ring 7 are associated with a single respective pusher 3, which is associated with movement means that are independent of those of the other pushers: as already mentioned, this embodiment can be obtained by associating each individual pusher with a corresponding movement means that is accommodated in, or associated with, the shank 3.

The center 5 for the workpiece P is coupled to the head 4 with the interposition of suitable elastic means: an axial thrust applied to the center 5 toward the inside of the head 4 determines a compression of the elastic means, with consequent retraction of the center 5 to a stroke limit position in which the end of the center 5 is substantially aligned with the end of the internal claws 6.

The operating method that identifies the operation of a transport device 1 according to the invention is constituted by a sequence of successive steps.

A first step a) provides for the arrangement of the workpiece P between the center 5 and a tailstock 10 of the machine tool, so that their respective ends 11 and 12 are accommodated within centering receptacles 13 and 14 provided on the workpiece P.

In a subsequent step b), it is necessary to apply a pressure P1, with the workpiece P, by means of the tailstock 10, on the center 5, producing a retraction thereof. Such retraction is due to the compression of the elastic means to which the center 5 is coupled, and occurs along a stroke up to a configuration in which the end 11 of the center 5 is substantially aligned with the end of the internal claws 6.

In this configuration, the claws 6 rest by forcing on the corresponding surface of the workpiece P (which is adjacent to the receptacle 13).

At this point, and for each ring 7 of the cavities 7a that is present, it is necessary to perform a step c) by means of which the respective pusher 9 is activated, by way of its external pusher means that apply a pressure P2, for the outward translational motion of the corresponding outer claws 8 guided by the respective cavities 7a of the respective ring 7 until forced resting occurs against the corresponding surface of the workpiece P (the surface being external and concentric with respect to the one against which the internal claws 6 rest).

It is then possible to perform a step d) that corresponds to the beginning of rotation and the machining of the workpiece P with the machine tool with which the transport device 1 is associated: in particular, a tool U cuts into the surface of the workpiece P, removing its superfluous parts.

If, during machining, reductions in diameter of the workpiece P are performed whose values are proximate to the diameter of one of the rings 7 that are present, possible interference between the tool U and the outer claws 8 associated with the ring 7 may occur. This is extremely dangerous, both for the safety of the personnel assigned to the machine tool and for the quality of the machining. Further, this type of machining could not be performed continuously on a traditional machine tool provided with traditional transport devices. It would in fact be necessary to suspend machining in order to replace the transport device with one having a diameter that is suitable for the final machining (the one having a smaller diameter) or to move onto another machine tool that is preset for machinings that provide for small diameters.

In this case, in order to facilitate the machining of the workpiece P, according to diameters that are smaller than the grip diameter of the external claws 8 related to a given ring 7 (a single ring 7 is provided in the accompanying figures and therefore one works on the claws 8 associated with it), it is necessary to perform an additional step e), which consists in the retraction of the pusher 9 that corresponds to the ring 7 of claws 8 whose diameter is close to the machining diameter of the workpiece P, by way of respective outer pusher means.

This determines the retraction of the claws 8, with consequent release of the corresponding area of the workpiece P: machining may be performed by the tool U without the risk that it might interfere or collide with the outer claws 8 that correspond to a grip diameter that is close to the machining diameter.

A final step f) provides for starting the machining of the workpiece P according to the design diameters, which are close to, or even smaller than, the diameter of the ring 7, with the machine tool with which the transport device 1 is associated.

In practice, the transport device 1 is a double transport device, which makes the machine tool that uses it particularly versatile and adapted to machine pieces of any diameter (optionally even machining on workpieces whose initial diameters are very large with respect to the diameter of the workpiece at the end of machining).

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A front transport device (1) for machine tools, of the type that comprises a substantially tubular body (2) that has, along its longitudinal axis (A), a rear shank (3) for detachable rigid coupling to the machine tool and is frontally associated with a head (4) for fastening the workpiece (P), said head (4) accommodating, in a central seat (4a), a center (5) for the workpiece (P), which is substantially coaxial to said longitudinal axis (A), and forming at least one peripheral seat (5a) for at least one respective claw (6), which is arranged around said center (5), **characterized in that** it comprises, externally with respect to said head (4), at least one ring (7) of external cavities (7a) for accommodating respective additional claws (8) that can slide along the axis (A), said additional claws (8) being selectively able to perform a translational motion toward the workpiece (P) by means of a respective pusher (9).

2. The transport device according to claim 1, **characterized in that** at least one portion of said rear shank (3) can perform a translational motion, by way of the action of suitable external pushers, said pusher (9) being associated with said movable portion of said rear shank (3) to move said additional external claws (8).

3. The transport device according to claim 2, **characterized in that** said suitable external pusher means comprise a respective hydraulic actuator.

4. The transport device according to claim 1, **characterized in that** said ring (7) is a single ring and comprises a plurality of cavities (7a) which are distributed and whose shapes and dimensions are complementary to those of the respective external claws (8).

5. The transport device according to claim 1, **characterized in that** said rings (7) are at least two, have different diameters and each one comprises a respective plurality of distributed cavities (7a) whose shapes and dimensions are complementary to those of the external claws (8) that they must accommodate.

6. The transport device according to claim 5, **characterized in that** all the external claws (8) related to a same ring (7) are associated with a single and respective pusher (9), which is associated with movement means that are independent of the means of the other pushers.

7. The transport device according to one or more of the preceding claims, **characterized in that** said center (5) on the workpiece (P) is rigidly coupled to said head (4) with the interposition of suitable elastic means, an axial thrust of said center (5) toward said head (4) determining a compression of the elastic means, with consequent retraction of said center (5) to a limited position in which said center (5) has its end (11) that is substantially aligned with the end of the internal claws (6).

8. Operating method of a transport device (1) according to claim 1, comprising the steps of:
a) arranging the workpiece (P) between the center (5) and the tailstock (10) of the machine tool, so that the ends (11, 12) thereof are accommodated within centering receptacles (13, 14) provided on the workpiece (P);
b) applying pressure, with the workpiece (P), by means of the tailstock (10), on the center (5), producing a retraction thereof which is caused by the compression of the elastic means to which it is rigidly coupled, to a configuration in which the end (11) of said center (5) is aligned substantially with the end of the internal claws (6), which rest by forcing on the corresponding surface of the workpiece (P);
c) for each ring (7) of claws (8), activating the respective pusher (9), by way of respective external pusher means, for the outward translational motion of the corresponding external claws (8) guided by the respective cavities (7a) of the respective ring (7) until forced resting against the corresponding surface of the part (P) occurs;
d) starting the rotation and the machining of the workpiece (P) with the machine tool with which the transport device (1) is associated.

9. The operating method according to claim 8, comprising, when reductions in the diameter of the workpiece (P) are performed during machining down to values that are close to the diameter of a said ring (7), the steps of:
e) retracting the pusher (9) that corresponds to the ring (7) of claws (8) whose diameter is proximate to the machining diameter of the workpiece (P), by way of respective external pusher means, for the retraction of said external claws (8) with consequent release of the corresponding area of the workpiece (P);
f) starting the machining of the workpiece (P) according to the design diameters, which are proximate and even lower than those of said ring (7), with the machine tool with which the transport device (1) is associated.
